# EUROPÄISCHE PATENTSCHRIFT

(11) **EP 0 400 384 B1**
(45) Veröffentlichungstag und Bekanntmachung des Hinweises auf die Patenterteilung: **21.06.1995**
(21) Anmeldenummer: 90109024.1
(22) Anmeldetag: 14.05.1990
(51) Int. Cl.: B42D 15/02

(54) **Informationsträger und Verfahren zu dessen Herstellung**
Information card and method for its manufacturing
Support d'information et son procédé de réalisation

(30) Priorität: 16.05.1989 CH 1809/89
(43) Veröffentlichungstag der Anmeldung: 05.12.1990
(73) Patentinhaber: CIBA-GEIGY AG, 4002 Basel (CH)
(72) Erfinder: Manser, Aloysius Hubertus, CH-4123 Allschwil (CH); François, Jacques, F-68330 Huningue (FR)
(74) Vertreter: Zumstein, Fritz, Dr.

(56) Entgegenhaltungen:
- EP-A- 0 031 521
- EP-A- 0 189 125
- EP-A- 0 249 266
- EP-A- 0 257 121
- US-A- 2 712 514
- US-A- 4 659 112

## Beschreibung

Die vorliegende Erfindung betrifft einen mehrlagigen Folienverbund, Verfahren zu dessen Herstellung und dessen Verwendung zur Sicherung von gedruckten Informationen, beispielsweise als Identitätskarte (ID-Karte).

ID-Karten aus Kunstoffolien sind an sich bekannt, Solche Karten bestehen im allgemeinen aus einer lichtundurchlässigen Kernfolie, welche die gewünschte Information enthalt und zwei transparenten Deckfolien zum Schutz der Kernfolie. Die Folien bestehen üblicherweise aus thermoplastischem Kunststoff und werden durch Auflaminieren miteinander verbunden. Einzelheiten dazu sind beispielsweise in Kunststoffe **77**, 880-1 (1987) beschrieben. Solche Karten sind im allgemeinen nicht fälschungssicher, da die Folien durch Erwärmen unter Erhalt der Information wieder getrennt werden können.

Es wurde bereits vorgeschlagen, ID-Karten durch Verkleben mit photopolymerisierbaren Gemischen herzustellen. Beispiele für verklebte Karten aus zwei transparenten Kunststoffolien sind in der EP-A-287,516 offenbart.

In der EP-A-0031521 wird ein Verfahren zur Herstellung fälschungssicherer Dokumente beschrieben, nach welchem der Informationsträger mit Folien, welche eine radikalisch hartbare Haftschicht enthalten, laminiert und gehartet wird Der dort eingesetzte Informationsträger ist lichtundurchlässig, so dass die Bestrahlung der zu hartenden Haftschichten beidseitig durchgeführt werden muss.
Die EP-A-0249266 schlägt vor, mehrschichtige, Daten enthaltende Karten herzustellen, indem der verwendete Kleber bei Raumtemperatur und ohne Druck zusammen mit den verschiedenen Folien laminiert und gehartet wird. Der eingesetzte Kleber besteht aus mindestens zwei untereinander reagierenden Komponenten, die erst zusammen reagieren, wenn die je eine dieser Komponenten enthaltenden Fläche in Kontakt gebracht werden, was bei der Herstellung von mehrschichtigen Folienverbundsystemen mehrere aufwändige Arbeitsschritte erfordert.
In US 2,712,514 wird ein Verfahren beispielsweise zur Herstellung von Identitätskarten beschrieben. Dabei werden verschiedene Folien, unter anderem Papierblätter, mit Lösungen harzbildender Kondensate beschichtet und nach thermischen Verfahren unter Druck verklebt.

Es wurde jetzt gefunden, dass ein Mehrfolienverbund, bei dem eine ausgewählte Zwischenschicht aus an sich lichtundurchlässigem Material vorhanden ist, durch Verkleben mit einer UV-/VIS-härtbaren Zusammensetzung hergestellt werden kann. Die Erfindung beruht auf der Erkenntnis, dass überraschenderweise ausgewählte an sich lichtundurchlässige Folien transparent werden, wenn sie mit einer UV-/VIS-hartbaren Zusammensetzung getränkt werden Solche an sich lichtundurchlässigen Folien sind für die Herstellung von ID-Karten von besonderem Interesse, da sie vor der Herstellung der Karten auf einfache Weise bedruckt werden können, vorzugsweise mittels computergesteuerter Druckverfahren, wie beispielsweise mittels Tintenstrahldruck. Gemäss der Erfindung werden solche Zwischenschichten mit dem Kleber und gegebenenfalls weiteren Zwischenschichten auf eine im wesentlichen lichtundurchlässige Grundfolie aufgebracht, gegebenenfalls mit weiterem Kleber versehen, mit einer im wesentlichen lichtdurchlässigen Deckfolie abgedeckt, und durch die Deckfolie bestrahlt, so dass der Kleber zwischen den verschiedenen Folienlagen durch und durch härtet.

Die vorliegende Erfindung betrifft einen Folienverbund, der mit einer UV-härtbaren und/oder VIS-härtbaren Zusammensetzung verklebt ist, und der zumindest folgende Schichten enthält:
A) eine im UV- und/oder VIS-Bereich im wesentlichen lichtundurchlässige Grundfolie,
B) mindestens eine Zwischenfolie auf der Basis von thermoplastischem Kunststoff, der zumindestens auf der der Grundfolie abgewandten Seite eine Schicht aus feinkörnigem, im Kleber praktisch unlöslichem Material aufweist, oder aus zusammengebackenen, zerriebenen Hohlkugeln oder Schuppen aus thermoplastischem Kunststoff, wobei die besagte Zwischenfolie auf der von der Grundfolie abgewandten Seite eine Information in Form eines Farbmusters trägt und wobei die Zwischenfolie vor dem Kontakt mit der UV-härtbaren und/oder VIS-härtbaren Zusammensetzung im wesentlichen für die zur Härtung der härtbaren Zusammensetzung benötigte Strahlung undurchlässig ist und nach dem Kontakt mit der härtbaren Zusammensetzung für die zu deren Härtung benötigte Strahlung durchlässig wird, so dass die härtbare Zusammensetzung zwischen den verschiedenen Folienlagen bei besagter Bestrahlung durch die Deckfolie durch und durch härtet, und
C) eine im UV- und/oder VIS-Bereich im wesentlichen lichtdurchlässige Deckfolie aus thermoplastischem Kunststoff.

Unter einer "UV-härtbaren und/oder VIS-härtbaren Zusammensetzung" versteht man im Rahmen dieser Beschreibung eine Klebstoffzusammensetzung, die mit Strahlung im Bereich von etwa 200 - 600 nm, insbesondere 320 - 450 nm, des elektromagnetischen Spektrums gehärtet oder aktiviert werden kann. Je nach Klebstofftyp kann sich an die Aktivierung mit UV-/VIS-Strahlung noch eine thermische Härtung anschliessen. Diese Verfahrensweisen sind dem Fachmann auf dem Gebiet der Strahlungshärtung von Klebstoffen an sich bekannt.

Unter einer "im wesentlichen lichtundurchlässigen Folie" versteht man im Rahmen dieser Beschreibung eine Folie, die im Bereich der Wellenlänge, bei der der Klebstoff gehärtet oder aktiviert werden kann, so wenig transparent ist, dass der Klebstoff bei Bestrahlung durch diese Folie nicht gehärtet oder aktiviert wird.

Unter einer "im wesentlichen lichtdurchlässigen Folie" versteht man im Rahmen dieser Beschreibung eine Folie, die im Bereich der Wellenlänge, bei der der Klebstoff gehärtet oder aktiviert werden kann, so transparent ist, dass der Klebstoff bei Bestrahlung durch diese Folie gehärtet wird oder so aktiviert wird, dass er im folgenden Hitzeschritt eine Verklebung des Folienverbundes ergibt.

Die Grundfolie A) kann aus praktisch allen im wesentlichen lichtundurchlässigen Materialien im Sinne der obigen Definition bestehen. Beispiele dafür sind Folien aus Metallen, wie aus Al oder Cu, aus Kunststoffen, wie aus Polyester, insbesondere Polyethylenterephthalat, Polycarbonat, Polyamid, Polyolefinen, insbesondere Polyethylen oder Polypropylen, Polyacrylnitril, Polymethacrylat, Polystyrol, insbesondere vernetztem Polystyrol, Polyvinylidenchlorid und Polyvinylchlorid, oder aus metallbeschichteten Kunststoffen, wie aus den oben genannten Kunststoffen, die mit Al oder Au bedampft sind. Die Grundfolie A) kann ferner ein Muster enthalten, beispielsweise in Form einer bedruckten Oberfläche.

Besonders bevorzugte Grundfolien A) bestehen aus thermoplastischen Kunststoffen, die gegebenenfalls ganzflächig oder teilweise metallbedampft sind. Bevorzugte Kunststoffe sind Polyethylenterephthalat oder Polyvinylchlorid.

Die Grundfolie ist im wesentlichen lichtundurchlässig und enthält vorzugsweise Pigmente und/oder Füllstoffe. Es kann sich aber auch um nicht pigmentierte thermoplastische Kunststoffolien handeln, sofern der Kunststoff lichtundurchlässig ist.

Ein Beispiel für ein geeignetes Pigment ist Titandioxid. Beispiele für Füllstoffe sind Talkum, Quarzmehl, Schwerspat (BaSO₄) und Metallpulver.

Die Deckfolie C) kann aus praktisch allen im wesentlichen lichtdurchlässigen Kunststoffen bestehen.

Beispiele dafür sind Cellophan oder bevorzugt transparente und thermoplastische Kunststoffe, wie gesättigte Polyester, transparente Polyamide, Polycarbonate, Polyethylene, teilvernetztes Polystyrol, Polyacrylnitril, Polyvinylidenchlorid und Polyvinylchlorid.

Die Deckfolie C) besteht vorzugsweise aus Polyethylenterephthalat oder aus Polyvinylchlorid.

Bei der Zwischenfolie B) kann es sich beispielsweise um Substrate handeln, die für den Tintenstrahldruck besonders ausgerüstet sind, um ein Verlaufen der aufgespritzten Drucktinte zu verhindern und um ein schnelles Eintrocknen der Tinte zu gewährleisten. Beispiele für solche Ausrüstungen sind in Kirk-Othmer, Encyclopedia of Chemical Technology, 3. Auflage, 10, 897 (1980) und 16, 803-825 (1980) oder in der US-A-4,426,466, der US-A-4,442,172, der DE-A-3,024,205 und der EP-A-252,884 zu finden.

Als Zwischenfolien können aber auch im wesentlichen lichtundurchlässige Substrate ohne spezielle Ausrüstung für den Tintenstrahldruck verwendet werden. Diese Substrate können auch mittels anderer Verfahren der Informationsübertragung beschriftet werden können, beispielsweise durch Hoch- oder Tiefdruckverfahren oder durch Siebdruck oder mittels Elektrophotografie, insbesondere mittels Laserdruck.

Die Zwischenfolie B) kann beispielsweise aus einer thermoplastischen Kunststoffolie bestehen, die auf beiden oder vorzugsweise auf einer Seite eine Schicht aus feinkörnigem, im Kleber praktisch unlöslichen Material aufweist. Diese Schicht dient als Träger der Farbmuster, welche den Informationsgehalt oder einen Teil des Informationsgehaltes der Karte darstellen. Die Schicht dient zur Verbesserung der Auflösung der Farbmuster, welche vorzugsweise mit Tintenstrahldruck aufgetragen werden, und sollte deshalb aus möglichst feinkörnigem Material bestehen. Dieses muss im zu verwendenden Kleber praktisch unlöslich sein, damit sich die Auflösung des Farbmusters beim Kleben infolge der Auflösung der Schichtbestandteile nicht verringert. Die Schicht kann beispielsweise aus feinkörnigem Material bestehen, das UV- und VIS-undurchlässig ist und die Drucktinte aufsaugt, so dass praktisch kein Verlaufen des aufgedrückten Musters erfolgt. Dazu eignen sich beispielsweise Quarzpulver. Bevorzugt werden Polykieselsäuren mit einer hohen spezifischen Oberfläche, beispielsweise von 200-800 m²/g (gemessen nach dem BET Verfahren). Solche Pulver sind beispielsweise unter der Bezeichnung Aerosil® oder Syloide® im Handel erhältlich. Diese Schicht ist stark lichtreflektierend oder lichtstreuend und somit ist die Zwischenfolie vor dem Kontakt mit dem Kleber im wesentlichen für die zur Härtung des Klebers benötigte Strahlung undurchlässig. Es wird angenommen, dass die Reflexion oder die Streuung infolge der Benetzung mit dem Kleber verringert wird, so dass anschliessend genügend Licht die Zwischenfolie durchdringen kann und somit auch den darunter liegenden Kleber härten kann.

Das auf die Zwischenfolie aufgebracht Farbmuster kann ein- oder mehrfarbig sein. Form und Grösse des Farbmusters bzw. die Art der Farbkörper werden so ausgewählt, dass die Farbkörper entweder bei der zur Härtung des Klebers benötigten Wellenlänge im wesentlichen lichtdurchlässig sind oder dass in den nicht mit Farbkörper bedeckten Bereichen der Folie B) eine ausreichende Verklebung mit der Grundfolie A) gewährleistet ist, so dass ein Lösen des Folienverbunds in seine Bestandteile nicht ohne Beschädigung oder Zerstörung einzelner Folien möglich ist.

Als UV-härtbare und/oder VIS-härtbare Zusammensetzung kann praktisch jeder Kleber verwendet werden, der mit Strahlung dieses Wellenlängenbereichs härtbar oder aktivierbar ist. Solche Kleber sind an sich bekannt.

Dabei kann es sich beispielsweise um Epoxidharzkleber handeln, die Photoinitiatoren enthalten. Gängige Photoinitiatoren für solche Kleber sind Oniumsalze mit Anionen geringer Nucleophilie, wie Sulfonium-, Sulfoxonium- oder Iodoniumsalze mit den Anionen PF₆⁻, AsF₆⁻ und SbF₆⁻, oder (η⁶-Aren)(η⁵-cyclopentadienyl)-eisen-II Komplexsalze mit den oben erwähnten Anionen. Beispiele für Epoxidharze enthaltend solche Photoinitiatoren sind in den US-A-4,868,288, US-A-4,216,288 und US-A-4,058,401 beschrieben.

Vor allem handelt es sich bei der UV-hartbaren und/oder VIS-hartbaren Zusammensetzung um Kleber auf Basis radikalisch polymerisierbarer Monomerer, insbesondere auf Basis von Acrylaten und/oder Methacrylaten.

Bevorzugt verwendet man UV-härtbare Kleber auf Basis von Acrylaten und/oder Methacrylaten, insbesondere Kleber, die im Wellenlängenbereich von 320 - 450 nm härtbar sind.

Besonders bevorzugte Kleber auf Acrylatbasis enthalten ein oligomeres (Meth)acrylat, ein monomeres (Meth)acrylat und einen Photoinitiator für die (Meth)acrylate, gegebenenfalls in Kombination mit einem Flexibilisator und/oder einem Sensibilisator für den Photoinitiator.

Das oligomere (Meth)acrylat ist vorzugsweise ein Acrylsäureester oder ein Methacrylsäureester eines hydroxyl-terminierten Polyurethan Präpolymeren.

Ganz besonders bevorzugte Kleber dieses Typs enthalten zusätzlich noch einen Haftvermittler, insbesondere einen Silanhaftvermittler, und noch einen Sensibilisator für den Photoinitiator.
Besonders bevorzugt verwendet man in diesen Klebern α-Aminoacetophenonderivate als Photoinitiatoren und Thioxanthonderivate als Photosensibilisator. Kleber dieses Typs sind in der EP-A-287,516 beschrieben. Dort findet man auch Beispiele von monomeren und oligomeren (Meth)acrylaten und von Flexibilisatoren.

Die Folienverbunde der vorliegenden Erfindung können mehrere Zwischenschichten des Typs B) und/oder noch zusätzliche lichtdurchlässige Zwischenschichten enthalten, sofern dadurch der Kleber im Folienverbund bis zur Grundfolie durch und durch strahlungshärtbar oder strahlungsaktivierbar bleibt. Solche zusätzlichen Zwischenschichten können Information zur Erhöhung der Fälschungssicherheit enthalten, beispielsweise in Form von Hologrammen oder von Oberflächenmustern mit unterschiedlichem Reflexionsgrad.

Es ist ferner möglich, den erfindungsgemässen Folienverbund symmetrisch aufzubauen, also auf beiden Seiten der Grundfolie A) je eine Zwischenschicht B) und je eine Deckfolie C) aufzubringen, wobei gegebenenfalls weitere Zwischenschichten anwesend sein können.

Die Erfindung betrifft auch Verfahren zur Herstellung der oben definierten Folienverbunde.

Eines dieser Verfahren ist gekennzeichnet durch die Schritte:
a1) Aufbringen einer Schicht einer UV-hartbaren und/oder VIS-hartbaren Zusammensetzung auf die Grundfolie A),
a2) Aufbringen der Zwischenfolie B) auf die Grundfolie A),
a3) Aufbringen einer weiteren Schicht einer UV-härtbaren und/oder VIS-hartbaren Zusammensetzung auf die Zwischenfolie B)
a4) Aufbringen einer Deckfolie C) auf die Zwischenfolie B), und
a5) einseitiges Bestrahlen des erhaltenen Folienverbunds von der Seite der Deckfolie C) her mit UV- und/oder VIS-Strahlung einer solchen Wellenlänge, so dass die härtbare Zusammensetzung durch und durch gehartet wird oder zumindest aktiviert wird, um in einer nachfolgenden thermischen Stufe durch und durch gehartet zu werden.

Eine weitere Ausführungsform des Verfahrens dieser Erfindung ist gekennzeichnet durch die Schritte:
b1) einseitiges Beschichten der Zwischenfolie B) und der Deckfolie C) mit einer UV-härtbaren und/oder VIS-hartbaren Zusammensetzung,
b2) Aufbringen von Folie B) auf Folie A) und dann von Folie C) auf Folie B) jeweils mit den klebstoffbeschichteten Seiten in Richtung auf Folie A), und
b3) einseitiges Bestrahlen des erhaltenen Folienverbunds von der Seite der Deckfolie C) her mit UV- und/oder VIS-Strahlung einer solchen Wellenlänge, so dass die härtbare Zusammensetzung durch und durch gehärtet wird oder zumindest aktiviert wird, um in einer nachfolgenden thermischen Stufe durch und durch gehartet zu werden.

Eine weitere Ausführungsform des Verfahrens dieser Erfindung ist gekennzeichnet durch die Schritte:
c1) Tränken der Zwischenfolie B) mit einer UV-härtbaren und/oder VIS-härtbaren Zusammensetzung,
c2) Einbringen dieser Folie zwischen die Grundfolie A) und die Deckfolie C), und
c3) einseitiges Bestrahlen des erhaltenen Folienverbunds von der Seite der Deckfolie her mit UV- und/oder VIS-Strahlung einer solchen Wellenlänge, so dass die hartbare Zusammensetzung durch und durch gehärtet wird oder zumindest aktiviert wird, um in einer nachfolgenden thermischen Stufe durch und durch gehartet zu werden.

Diese Verfahren können selbstverständlich so abgewandelt werden, dass damit die Herstellung von Folienverbunden mit mehreren Zwischenschichten möglich wird.

Die Applikation der Klebstoffgemische erfolgt auf an sich bekannte Weise. Die Schichtdicke der Klebefilme beträgt dabei im allgemeinen nicht mehr als 100 »m, vorzugsweise 5 bis 50 »m. Es können aber falls zweckmässig auch wesentlich dickere Schichten durch Bestrahlung ausgehärtet werden.

Vor der Beschichtung mit dem Klebstoffgemisch können die zu verklebenden Oberflächen, falls zweckmässig, entfettet und aufgerauht werden.

Nach dem Zusammenfügen der beschichteten Oberflächen werden diese gegebenenfalls zusammengepresst oder verklammert und durch Bestrahlung durch die im Bereich der Härtungswellenlänge des Klebers durchlässige Deckfolie gehärtet. Vorzugsweise härtet man den Folienverbund unmittelbar nach dem Kaschieren der verschiedenen Folien ohne zusätzliche Fixierung durch einfaches Bestrahlen mit UV- und/oder VIS-Strahlung durch die Deckfolie. Die Härtung erfolgt je nach Lichtquelle, dem zu verklebenden Material und dem verwendeten Klebstoff im allgemeinen innerhalb von etwa 0,1 bis 30 Sekunden.

Man kann die Herstellungsverfahren vorzugsweise auch teilweise oder gänzlich kontinuierlich durchführen.

Als Lichtquellen für die Bestrahlung der Klebeverbindungen kommt eine grosse Anzahl der verschiedensten Typen zur Anwendung. Diese sind dem Fachmann an sich bekannt. Beispielsweise kann man Quecksilberdampflampen oder Metall-Halogenlampen verwenden. Durch Wahl geeigneter Kleber kann die Härtung auch durch Tageslicht erfolgen.

Die erfindungsgemässen Folienverbunde lassen sich im weitesten Sinne zur Sicherung von gedruckten Informationen einsetzen, beispielsweise als Kreditkarten, Wertpapiere, Pässe, Personalausweise oder Identitätskarten. Die Erfindung betrifft auch die Verwendung der Karten für die oben erwähnten Zwecke.

Die folgenden Beispiele erläutern die Erfindung. Die in den Beispielen verwendeten Gemische werden hergestellt, indem man die jeweiligen Komponenten in einem Dissolver zusammenmischt und bei 50-60°C während höchstens 15 Minuten homogenisiert. Dabei entsprechen Mengenangaben Gewichtsteilen, sofern nichts anderes definiert ist.

Beispiel 1: Man stellt folgende Klebstoffzusammensetzung her:
46 Teile eines aliphatischen Urethanacrylates (EBECRYL® 254 der Fa. UCB)
10 Teile Glycidylmethacrylat (SR® 379 der Fa. Sartomer)
40 Teile 1-Vinyl-2-pyrrolidon
1,5 Teile Benzyldimethylketal
0,5 Teile 2-Dimethylaminoethyl-benzoat (Quantacure® DMB der Fa. Ward-Blenkinsop)
2 Teile Dioctylphthalat.
Zur Herstellung eines Dreifolienverbundes wird auf beide Seiten einer "Informationsträgerfolie" aus thermoplastischem Kunststoff, die einseitig eine mikroporöse, stark reflektierende Schicht aus Polykieselsäurepulver enthält, mit einer Spiralrakel ein homogener Film von je ca. 25 »m der obigen Klebstofformulierung aufgebracht. Diese Folie trägt auf der Seite mit der mikroporösen Schicht eine mittels Tintenstrahldruck aufgebrachte Abbildung. Diese Schicht verändert sich durch die Einwirkung des Klebstoffes optisch und wird dabei lichtdurchlässig. Diese Folie wird nun auf eine ca. 300 »m dicke weisspigmentierte PVC Folie aufgerollt. Auf diese Kombination wird nun eine ca. 100 »m dicke PVC-Klarsichtfolie blasenfrei aufgebracht und mit einer 4 mm dicken Fensterglasplatte abgedeckt. Die Härtung dieser Sandwichanordnung erfolgt durch Bestrahlung von der Seite der PVC-Klarsichtfolie her mit einer Quecksilber-Hochdrucklampe von 80 W/cm in einem Minicure® Prüfgerät in einem Abstand von 5-7 cm. Dank der optischen Veränderung der Informationsträgerfolie ist es nun möglich, die Polymerisation beider Klebstoffschichten in nur einem einzigen Betrahlungsvorgang zu realisieren.

Beispiel 2: Man stellt folgende Klebstoffzusammensetzung her:
25 Teile eines aiiphatischen Urethanacrylates (EBECRYL® 270 der Fa. UCB)
35 Teile Isobornylacrylat
20 Teile 1-Vinyl-2-pyrrolidon
20 Teile eines vinyl-endständigen Butadien-Acrylnitril Copolymers (Hycar® VTBNX 1300x23 der Fa. B.F. Goodrich)
5 Teile eines Photoinitators der folgenden Formel

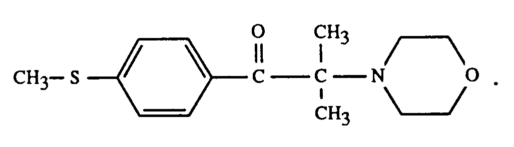

Die Herstellung eines Dreifolienverbundes erfolgt analog zu Beispiel 1, wobei anstelle der "Informationsträgers" ein Ink-jet Papier der Fa. Canon verwendet wird, das einseitig eine mittels Tintenstrahldruck aufgebrachte Abbildung trägt. Dieses Papier ändert bei der Kontaktierung durch die Klebstoff Formulierung ebenfalls die Transmission, wird allerdings nicht klar transparent. Der Dreifolienverbund wird allerdings so durchlässig, dass genügend UV-Strahlung das Ink-jet Papier passieren kann, um die darunter liegende Klebstoffschicht durch und durch zu härten.

Beispiel 3: Man stellt folgende Klebstoffzusammensetzung her:
24 Teile eines aliphatischen Urethanacrylates (EBECRYL® 270 der Fa. UCB)
35 Teile Isobornylacrylat
20 Teile 1-Vinyl-2-pyrrolidon
20 Teile eines vinyl-endständigen Butadien-Acrylnitril Copolymers (Hycar® VTBNX 1300x23 der Fa. B.F.Goodrich)
1 Teil γ-Glycidoxypropyltrimethoxysilan (Union Carbide)
3 Teile eines Photoinitators gemäss Beispiel 2
0,2 Teile eines Thioxanthonsensibilisators (Quantacure® ITX der Fa. Ward- Blenkinsop)
Zur Herstellung des Dreilagen-Verbundes wird eine Informationsträgerfolie der Fa. Hewlett Packhard (2 fold paint jet paper No. 51630 P), welche einseitig eine mittels Tintenstrahldruck aufgebrachte Abbildung trägt, in obiger Formulierung getränkt und durch zwei sich in festem Abstand zur Folie fixierte Spiralrakel gezogen. Dabei wird beidseitig der überschüssige Klebstoff abgerakelt und jeweils ein Film von 25 »m Schichtstärke auf den Informationsträger appliziert. Die weitere Verarbeitung erfolgt in Analogie zu und mit der Grund- bzw. Deckfolie gemäss Beispiel 1. Man erhält auf diese Weise einen verklebten Dreifolienverbund.

## Patentansprüche

1. Folienverbund, der mit einer UV-härtbaren und/oder VIS-hartbaren Zusammensetzung verliebt ist, und der zumindest folgende Schichten enthält:
A) eine im UV- und/oder VIS-Bereich im wesentlichen lichtundurchlässige Grundfolie, B) mindestens eine Zwischenfolie auf der Basis von thermoplastischem Kunststoff, der
zumindestens auf der der Grundfolie abgewandten Seite eine Schicht aus feinkörnigem, im Kleber praktisch unlöslichen Material aufweist, oder aus zusammengebackenen, zerriebenen Hohikugeln oder Schuppen aus thermoplastischem Kunststoff, wobei die besagte Zwischenfolie auf der von der Grundfolie abgewandten Seite eine Information in Form eines Farbmusters trägt und wobei die Zwischenfolie vor dem Kontakt mit der UV-härtbaren und/oder VIS-härtbaren Zusammensetzung im wesentlichen für die zur Härtung der härtbaren Zusammensetzung benötigte Strahlung undurchlässig ist und nach dem Kontakt mit der härtbaren Zusammensetzung für die zu deren Hartung benötigte Strahlung durchlässig wird, so dass die härtbare Zusammensetzung zwischen den verschiedenen Folienlagen bei besagter Bestrahlung durch die Deckfolie durch und durch härtet, und
C) eine im UV- und/oder VIS-Bereich im wesentlichen lichtdurchlässige Deckfolie aus thermoplastischem Kunststoff.

2. Folienverbund gemäss Anspruch 1, dadurch gekennzeichnet, dass die Grundfolie aus einem thermoplastischen Kunststoff besteht, der gegebenenfalls ganzflächig oder teilweise metallbedampft ist, insbesondere aus Polyethylenterephthalat oder aus Polyvinylchlorid.

3. Folienverbund gemäss Anspruch 1, dadurch gekennzeichnet, dass die Deckfolie aus Polyethylenterephthalat oder aus Polyvinylchlorid besteht.

4. Folienverbund gemäss Anspruch 1, dadurch gekennzeichnet, dass die Zwischenfolie aus einer thermoplastischen Kunststoffolie besteht, die auf einer Seite eine Schicht aus feinkörnigen Polykieselsäuren mit einer hohen spezifischen Oberfläche aufweist.

5. Folienverbund gemäss Anspruch 1, dadurch gekennzeichnet, dass ein UV-härtbarer Kleber auf Basis von Acrylaten und/oder Methycrylaten verwendet wird, insbesondere ein Kleber, der im Wellenlängenbereich von 320 - 450 nm härtbar ist.

6. Folienverbund gemäss Anspruch 1, dadurch gekennzeichnet, dass ein UV-härtbarer Kleber enthaltend ein oligomeres (Meth)acrylat, ein monomeres (Meth)acrylat und einen Photoinitiator für die (Meth)acrylate, gegebenenfalls in Kombination mit einem Flexibilisator und/oder einem Sensibilisator für den Photoinitiator verwendet wird.

7. Folienverbund gemäss Anspruch 6, dadurch gekennzeichnet, dass der Kleber ein α-Aminoacetophenonderivat als Photoinitiator und ein Thioxanthonderivat als Photosensibilisator und zusätzlich noch einen Silanhaftvermittler enthält.

8. Verfahren zur Herstellung des Folienverbunds gemäss Anspruch 1 umfassend die Schritte:
a1) Aufbringen einer Schicht einer UV-härtbaren und/oder VIS-härtbaren Zusammensetzung auf die Grundfolie,
a2) Aufbringen der Zwischenfolie auf die Grundfolie,
a3) Aufbringen einer weiteren Schicht einer UV-hartbaren und/oder VIS-härtbaren Zusammensetzung auf die Zwischenfolie,
a4) Aufbringen einer Deckfolie auf die Zwischenfolie, und
a5) einseitiges Bestrahlen des erhaltenen Folienverbunds von der Seite der Deckfolie her mit UV- und/oder VIS-Strahlung einer solchen Wellenlänge, so dass die härtbare Zusammensetzung durch und durch gehärtet wird oder zumindest aktiviert wird, um in einer nachfolgenden thermischen Stufe durch und durch gehärtet zu werden.

9. Verfahren zur Herstellung des Folienverbunds gemäss Anspruch 1 umfassend die Schritte:
b1) einseitiges Beschichten der Zwischenfolie und der Deckfolie mit einer UV-härtbaren und/oder VIS-härtbaren Zusammensetzung,
b2) Aufbringen der Zwischenfolie auf die Grundfolie und dann der Deckfolie auf die Zwischenfolie jeweils mit den klebstoffbeschichteten Seiten in Richtung auf die Grundfolie, und
b3) einseitiges Bestrahlen des erhaltenen Folienverbunds von der Seite der Deckfolie her mit UV- und/oder VIS-Strahlung einer solchen Wellenlänge, so dass die härtbare Zusammensetzung durch und durch gehärtet wird oder zumindest aktiviert wird, um in einer nachfolgenden thermischen Stufe durch und durch gehartet zu werden.

10. Verfahren zur Herstellung des Folienverbunds gemäss Anspruch 1 umfassend die Schritte:
c1) Tränken der Zwischenfolie mit einer UV-härtberen und/oder VIS-härtbaren Zusammensetzung,
c2) Einbringen dieser Folie zwischen die Grundfolie und die Deckfolie, und
c3) einseitiges Bestrahlen des erhaltenen Folienverbunds von der Seite der Deckfolie her mit UV- und/oder VIS-Strahlung einer solchen Wellenlänge, so dass die hartbare Zusammensetzung durch und durch gehärtet wird oder zumindest aktiviert wird, um in einer nachfolgenden thermischen Stufe durch und durch gehärtet zu werden.

11. Verwendung des Folienverbunds gemäss Anspruch 1 als Kreditkarte, Wertpapier, Pass, Personalausweis oder Identitätskarte.

## Claims

1. A film laminate which is adhesively bonded with a UV-curable and/or VIS-curable composition and which contains at least the following layers:
A) a base film which is substantially impervious to light,
B) at least one interlayer based on a thermoplastic, which carries at least on the side with its back to the base film a layer of finely particulate material which is virtually insoluble in the adhesive, or of compacted, pulverized hollow beads or flakes of a thermoplastic, the said interlayer carrying information in the form of a colour pattern on the side with its back to the base film, and where the interlayer, prior to contact with the UV-curable and/or VIS-curable composition, is substantially impervious to the radiation necessary for curing the curable composition, and, after contact with the curable composition, becomes pervious to the radiation necessary for curing the latter, so that the curable composition cures fully between the different film layers on said irradiation through the cover film, and
C) a cover film which is substantially pervious to light in the UV and/or VIS region and which comprises a thermoplastic.

2. A film laminate according to claim 1, wherein the base film consists of a thermoplastic which is optionally coated on the entire surface, or part of the surface, by vapour-depositing a metal thereon, and consists in particular of polyethylene terephthalate or polyvinyl chloride.

3. A film laminate according to claim 1, wherein the cover film consists of polyethylene terephthalate or polyvinyl chloride.

4. A film laminate according to claim 1, wherein the interlayer consists of a thermoplastic which carries on one side a layer of finely particulate polysilicic acids having a high specific surface area.

5. A film laminate according to claim 1, wherein a UV-curable adhesive is used which is based on acrylates and/or methacrylates, in particular an adhesive which is curable in the wavelength range of 320-450 nm.

6. A film laminate according to claim 1, wherein a UV-curable adhesive is used which comprises an oligomeric (meth)acrylate, a monomeric (meth)acrylate and a photoinitiator for the (meth)acrylates, optionally in combination with a flexibiliser and/or a sensitiser for the photoinitiator.

7. A film laminate according to claim 6, wherein the adhesive contains an α-aminoacetophenone derivative as photoinitiator and a thioxanthone derivative as photosensitiser and also, in addition, a silane coupling agent.

8. A process for the preparation of a film laminate according to claim 1, which comprises the steps of:
a1) applying a layer of a UV-curable and/or VIS-curable composition to the base film,
a2) applying the interlayer to the base film,
a3) applying a further layer of a UV-curable and/or VIS-curable composition to the interlayer,
a4) applying a cover film to the interlayer, and
a5) irradiating the resulting film laminate on one side from the side of the cover film with UV and/or VIS radiation of a wavelength which is such that the curable composition is completely cured or is at least activated so that it may be completely cured in a subsequent heating stage.

9. A process for the preparation of a film laminate according to claim 1, which comprises the steps of:
b1) coating the interlayer on one side and the cover film with a UV-curable and/or VIS-curable composition,
b2) applying the interlayer to the base film and then the cover film to the interlayer, in each case with the adhesive-coated sides towards the base film, and
b3) irradiating the resulting film laminate on one side from the side of the cover film with UV and/or VIS radiation of a wavelength which is such that the curable composition is completely cured or is at least activated so that it may be completely cured in a subsequent heating stage.

10. A process for the preparation of a film laminate according to claim 1, which comprises the steps of:
c1) impregnating the interlayer with a UV-curable and/or VIS-curable composition,
c2) inserting said interlayer between the base film and the cover film, and
c3) irradiating the resulting film laminate on one side from the side of the cover film with UV and/or VIS radiation of a wavelength which is such that the curable composition is completely cured or is at least activated so that it may be completely cured in a subsequent heating stage.

11. The use of a film laminate according to claim 1 as a credit card, financial security document, passport or identity card.

## Revendications

1. Composite en feuilles qui est encollé avec une composition durcissable par UV et/ou durcissable par VIS, et qui contient au moins les couches suivantes :
A) une feuille de base essentiellement opaque dans le domaine UV et/ou VIS,
B) au moins une feuille intermédiaire à base de matière plastique thermoplastique, qui présente au moins, sur le côté opposé à la feuille de base, une couche à base d'un matériau pratiquement insoluble dans la colle, à grains fins, ou à base de sphères creuses pulvérisées, agglutinées, ou de flocons à base de matière plastique thermoplastique, ladite feuille intermédiaire portant sur le côté opposé à la feuille de base, une information sous la forme d'un motif coloré et la feuille intermédiaire étant, avant le contact avec la composition durcissable par UV et/ou durcissable par VIS, essentiellement opaque au rayonnement nécessaire pour le durcissement de la composition durcissable et devenant, après le contact avec la composition durcissable, transparente au rayonnement nécessaire à son durcissement, de telle sorte que la composition durcissable durcisse entre les différentes couches de feuilles sous ledit rayonnement au travers de la feuille de base, de part en part, et
C) une feuille de recouvrement pour l'essentiel translucide dans le domaine UV et/ou dans le domaine VIS, à base de matière plastique thermoplastique.

2. Composite en feuilles selon la revendication 1, caractérisé en ce que la feuille de base est formée d'une matière plastique thermoplastique, qui est éventuellement métallisée partiellement ou sur toute la surface, en particulier en téréphthalate de polyéthylène ou en chlorure de polyvinyle.

3. Composite en feuilles selon la revendication 1, caractérisé en ce que la feuille de recouvrement est formée de téréphthalate de polyéthylène ou de chlorure de polyvinyle.

4. Composite en feuilles selon la revendication 1, caractérisé en ce que la feuille intermédiaire est formée d'une feuille en matière plastique thermoplastique, qui présente sur un côté une couche d'acide polysilicique à grains fins ayant une surface spécifique élevée.

5. Composite en feuilles selon la revendication 1, caractérisé en ce qu'une colle, durcissable par UV, à base d'acrylate et/ou de méthacrylate est utilisée, en particulier une colle qui est durcissable dans le domaine des longueurs d'ondes compris entre 320 - 450 nm.

6. Composite en feuilles selon la revendication 1, caractérisé en ce qu'une colle durcissable par UV contenant un (meth)acrylate oligomère, un (meth)acrylate monomère et un photo-initiateur pour le (meth)acrylate éventuellement en combinaison avec un flexibilisateur et/ou un sensibilisateur pour le photo-initiateur est utilisée.

7. Composite en feuilles selon la revendication 6, caractérisé en ce que la colle contient un dérivé d'α-aminoacétophénone en tant que photo-initiateur et un dérivé de thioxanthone en tant que photo-sensibilisateur et en plus un agent d'adhésion à base de silane.

8. Procédé pour la préparation du composite en feuilles selon la revendication 1 englobant les étapes :
a1) disposition d'une couche d'une composition durcissable par UV et/ou durcissable par VIS sur la feuille de base,
a2) disposition d'une feuille intermédiaire sur la feuille de base,
a3) disposition d'une autre couche d'une composition durcissable par UV et/ou durcissable par VIS sur la feuille intermédiaire,
a4) disposition d'une feuille de recouvrement sur la feuille intermédiaire et
a5) irradiation unilatérale du composite en feuilles obtenu de par le côté de la feuille de recouvrement avec un rayonnement UV et/ou un rayonnement VIS à une longueur d'onde telle que la composition durcissable soit durcie de part en part ou au moins soit activée afin d'être durcie de part en part dans une étape thermique ultérieure.

9. Procédé pour la préparation du composite en feuilles selon la revendication 1 englobant les étapes :
b1) une enduction unilatérale de la feuille intermédiaire et de la feuille de recouvrement avec une composition durcissable par UV et/ou durcissable par VIS,
b2) disposition de la feuille intermédiaire sur la feuille de base et ensuite de la feuille de recouvrement sur la feuille intermédiaire chaque fois avec les côtés enduits de colle dans direction de la feuille de base, et
b3) irradiation unilatérale du composite en feuilles obtenu de par le côté de la feuille de recouvrement avec un rayonnement UV et/ou un rayonnement VIS d'une longueur d'onde telle que la composition durcissable soit durcie de part en part ou soit au moins activée afin d'être durcie de part en part dans une étape thermique ultérieure.

10. Procédé pour la préparation du composite en feuilles selon la revendication 1 englobant les étapes :
c1) imprégnation de la feuille intermédiaire avec une composition durcissable par UV et/ou durcissable par VIS,
c2) disposition de cette feuille entre la feuille de base et la feuille de recouvrement, et
c3) irradiation unilatérale du composite en feuilles obtenu de part en part du côté de la feuille de recouvrement avec un rayonnement UV et/ou un rayonnement VIS à une longueur d'ondes telle que la composition durcissable soit durcie de part en part ou soit au moins activée afin qu'elle soit durcie de part en part dans une étape thermique ultérieure.

11. Utilisation du composite en feuilles selon la revendication 1 en tant que cartes de crédit, valeurs, passeports, laissez-passer personnel ou cartes d'identité.
